# EUROPÄISCHE PATENTANMELDUNG

(11) **EP 4 592 225 A1**
(43) Veröffentlichungstag der Anmeldung: **30.07.2025**
(21) Anmeldenummer: 25153504.3
(22) Anmeldetag: 23.01.2025
(51) Int. Cl.: B65G 51/06

(54) **HÜLSE FÜR EINE ROHRPOSTANLAGE**

(30) Priorität: 23.01.2024 AT 500432024
(71) Anmelder: Ing. Sumetzberger GmbH, 1110 Wien (AT)
(72) Erfinder: Friedrich, Peter, 1040 Wien (AT)
(74) Vertreter: Müllner, Martin

(57) **Zusammenfassung**

Die vorliegende Erfindung betrifft eine Hülse für eine Rohrpostanlage. Diese besteht aus einem zylindrischen Hülsenrohr (1), einem unteren Hülsenkopf (2') und einem oberen Hülsenkopf (2), wobei der untere und der obere Hülsenkopf (2', 2) jeweils einen Gleitring (3) aufweisen. Der obere Hülsenkopf (2) weist einen Deckel (4) auf, der um eine Achse, die am Rand der Hülse im Wesentlichen parallel zur Längsachse der Hülse angeordnet ist, schwenkbar gelagert ist. Der Deckel ist mittels Drehung um die Achse des Deckels (4) öffenbar. Am Deckel (4) ist eine erste Dichtung vorgesehen, die an einer Dichtfläche des oberen Hülsenkopfes (2) unter axialer Vorspannung anliegt. Damit sich die Hülse wirtschaftlich fertigen lässt und das Öffnen erleichtert wird, ist die erste Dichtung austauschbar, und die erste Dichtung ist im montierten Zustand gegenüber dem Deckel (4) unbeweglich. Vorzugsweise ist eine zweite Dichtung am oberen Hülsenkopf (2) vorgesehen.

## Beschreibung

### Technisches Gebiet

Die vorliegende Erfindung betrifft eine Hülse für eine Rohrpostanlage, bestehend aus einem zylindrischen Hülsenrohr, einem unteren Hülsenkopf und einem oberen Hülsenkopf, wobei der untere und der obere Hülsenkopf jeweils einen Gleitring aufweisen und wobei der obere Hülsenkopf einen Deckel aufweist, der um eine Achse, die am Rand der Hülse im Wesentlichen parallel zur Längsachse der Hülse angeordnet ist, schwenkbar gelagert ist und der Deckel mittels Drehung um die Achse des Deckels öffenbar ist, wobei der obere Hülsenkopf eine erste Dichtfläche und der Deckel eine erste Dichtung aufweist, die bei geschlossenem Deckel unter axialer Vorspannung an der ersten Dichtfläche aufliegt.

### Stand der Technik

Eine solche Hülse ist der AT 405506 B zu entnehmen. Problematisch ist dabei, dass sich der Deckel der Hülse nur mit hohem Kraftaufwand schließen und öffnen lässt, da die Dichtung, die am Deckel des Hülsenkopfs befestigt ist, am Hülsenkopf reibt. Der Deckel könnte beispielsweise im 1k oder 2k Spritzgussverfahren kostengünstig hergestellt werden. Wählt man allerdings einen 1k Spritzguss ist die Dichtung aus demselben Material wie der Rest des Hülsenkopfs. Die Dichtung und der gesamte Hülsenkopf hätten hierbei somit auch dieselben Materialeigenschaften. Da der Hülsenkopf hart sein soll und die Dichtung weich, ist eine Fertigung im 1k Spritzguss nicht sinnvoll möglich. Beim 2k Spritzguss ist die Fertigung der Dichtung und des übrigen Deckels zwar möglich, aber der Deckel selbst hat bevorzugt ein eigenes Material für eine Prallfläche, damit die Hülse beim Abbremsen in einer Rohrpoststation gedämpft wird. Eine naheliegende Möglichkeit wäre hier, die Prallfläche und die Dichtung aus demselben Material zu fertigen und die restliche Hülse aus einem anderen. Hierbei ist allerdings das Material der Dichtung oder der Prallfläche nicht optimal. Außerdem ist ein 2k Spritzguss bereits teurer als ein 1k Spritzguss. Ein 3k Spritzguss ist wesentlich teurer und aufwändiger, sofern er überhaupt durchgeführt werden kann.

Bei der Hülse gemäß der AT 405506 B hat sich als Problem herausgestellt, dass die Reibung der Dichtung oftmals so hoch ist, dass das Öffnen kaum möglich ist. Andererseits kann es passieren, dass die Reibung der Dichtung beim Schließen so hoch ist, dass die Dichtlippe nicht vollständig auf der Dichtfläche aufliegt.

Damit der geschlossene Deckel nicht abheben kann, sind am Deckel Vorsprünge bzw. Ausnehmungen vorgesehen, die in entsprechende Ausnehmungen bzw. Vorsprünge am Hülsenkopf eingreifen. Die bekannten Vorsprünge sind beim Gebrauch aber oftmals gebrochen, was die Dichtigkeit der Hülse gefährdet hat.

Ein weiterer Nachteil besteht darin, dass nur eine einzige Abdichtung vorgesehen ist, was insbesondere beim Transport von Zytostatika nicht ausreichend ist, denn wenn diese eine Abdichtung versagt, könnte das Zytostatikum ausrinnen und die Rohre der Rohrpostanlage verunreinigen. Aufgrund der hohen Gesundheitsschädlichkeit von Zytostatika ist die Reinigung wegen der notwendigen Schutzmaßnahmen extrem aufwändig.

WO 2012/150092 A1 weist auch nur eine Dichtung auf, diese ist im Deckel angeordnet, wobei der Deckel bzw. die Dichtung unter axialer Spannung an die Hülse gedrückt wird. Der Deckel hat eine eigene Mechanik, die dafür sorgt, dass zuerst die Dichtung von der Hülse abgehoben wird, und erst danach lässt sich der Deckel drehen. Die zusätzliche Mechanik macht den Deckel teurer und die Handhabung umständlicher.

Eine weitere Hülse ist der EP 2754628 A1 zu entnehmen. Hierbei ist allerdings auch nur eine Dichtung vorgesehen, und der Deckel selbst erfüllt keine Dichtfunktion bzw. weist keine Dichtung auf.

DE 4111494 C2 zeigt ebenfalls eine Rohrposthülse. Hier ist ein Dichtdeckel vorgesehen, der die Rohrposthülse durch Einstecken verschließt.

DE 2034897 A1 zeigt einen Verschluss für eine Rohrposthülse. Hierbei ist ein Dichtelement vorgesehen, das mit einer Scheibe aus beispielsweise Gummi gegen das Innere der Rohrposthülse drückt.

### Kurzbeschreibung der Erfindung

Ziel der vorliegenden Erfindung ist es, eine Hülse zu kreieren, die eine hohe Dichtwirkung aufweist, sich aber trotzdem noch leicht öffnen lässt. Insbesondere soll die Hülse für den Zytostatikatransport geeignet sein. Hierfür muss die Hülse durch einen Dichtheitstest zertifiziert werden. Weiters sollen die Hülse und insbesondere der Deckel wirtschaftlich und kostengünstig gefertigt werden können.

Dieses Ziel wird durch eine Hülse der eingangs genannten Art erfindungsgemäß dadurch erreicht, dass die erste Dichtung austauschbar ist und die erste Dichtung im montierten Zustand gegenüber dem Deckel unbeweglich ist. Durch die austauschbare Dichtung wird ermöglicht, dass die Dichtung aus einem speziellen Material besteht, das das Öffnen und schließen des Deckels erleichtert, indem es beispielsweise aus einem Material besteht, das weniger reibt und trotzdem gut abdichtet. Dieses Material kann unabhängig von dem Material des Hülsenkopfs und dessen Prallfläche gewählt werden, wobei der Hülsenkopf und dessen Prallfläche nach wie vor im 2k-Spritzgussverfahren kostengünstig herstellbar sind. Weiters erlaubt es das einfache Ersetzen der Dichtung. Entsprechend der Erfindung wird kein separater Öffnungsmechanismus benötigt, bei dem die Dichtung zuerst angehoben wird und erst dann der Deckel gedreht wird. Entsprechend ist der Deckel so angeordnet, dass er direkt von der geschlossenen Stellung, in der die erste Dichtung dicht an der Dichtfläche anliegt, in eine geöffnete Stellung gedreht wird. Das ist unter anderem deswegen möglich, weil die erste Dichtung flach auf der Dichtfläche anliegt und sich deswegen entlang der Dichtfläche bewegen kann.

Es kann auch vorgesehen sein, dass die erste Dichtung aus einem anderen Material als der Deckel besteht, dass der Deckel bevorzugt aus zwei Materialien besteht, und dass der Deckel besonders bevorzugt im 1k oder 2k Spritzguss hergestellt ist. Die Verwendung eines anderen Materials ermöglicht die perfekte Abstimmung der Dichtung auf den Einsatzzweck und in Kombination mit der austauschbaren Dichtung auch eine wirtschaftliche und kostengünstige Fertigung der Hülse bzw. des Deckels.

Eine bevorzugte Ausführungsform ist so ausgestaltet, dass die erste Dichtung auf einer Dichtplatte befestigt ist und die Dichtplatte auf dem Deckel befestigt ist. Eine Dichtplatte mit der ersten Dichtung kann also einfach auf dem Deckel befestigt werden, wodurch das Anbringen der ersten Dichtung bzw. das Tauschen der Dichtung wesentlich erleichtert wird. Beispielsweise kann die Dichtplatte auf den Deckel geschraubt werden oder mittels Schnappverbindung befestigt werden. Natürlich kann sie auch geklebt oder anders befestigt werden.

Andererseits kann auch vorgesehen sein, dass die Dichtfläche der Hülse zur Achse des Deckels in einem um rund 1 ° vom rechten Winkel abweichenden Winkel steht, sodass ein Ende der Dichtfläche in Öffnungsrichtung näher an der Hülsenmitte liegt als ein Ende der Dichtfläche in entgegengesetzter Öffnungsrichtung. Durch diese Neigung der Dichtfläche in Öffnungsrichtung wird alleine durch die Öffnung (Drehung) schon der Abstand von der ersten Dichtung zur ersten Dichtfläche erhöht, wodurch eine geringere Kraft zur Öffnung benötigt wird. Natürlich können auch hier Hebekeile (siehe unten) verwendet werden, wodurch das Freistellen leichter ermöglicht wird. Die Schräge lässt also bei gleicher Kraft zur Öffnung weichere Weichkomponenten der Dichtlippe und somit eine erhöhte Dichtheit zu, bzw. bei gleich weichen Weichkomponenten wird eine geringere Kraft zur Öffnung benötigt.

Diese Ausführungsform kann auch mit folgender Implementierung durchgeführt werden: Hülse für eine Rohrpostanlage, bestehend aus einem zylindrischen Hülsenrohr, einem unteren Hülsenkopf und einem oberen Hülsenkopf, wobei der untere und der obere Hülsenkopf jeweils einen Gleitring aufweisen und wobei der obere Hülsenkopf einen Deckel aufweist, der um eine Achse, die am Rand der Hülse parallel zur Längsachse der Hülse angeordnet ist, schwenkbar gelagert ist, wobei der obere Hülsenkopf oder der Deckel eine erste Dichtfläche und der Deckel bzw. der obere Hülsenkopf eine erste Dichtung aufweist, die bei geschlossenem Deckel unter axialer Vorspannung an der ersten Dichtfläche aufliegt, dadurch gekennzeichnet, dass die Dichtfläche der Hülse zur Achse des Deckels in einem um rund 1 ° vom rechten Winkel abweichenden Winkel steht, sodass ein Ende der Dichtfläche in Öffnungsrichtung näher an der Hülsenmitte liegt als ein Ende der Dichtfläche in entgegengesetzter Öffnungsrichtung. Es sind für diese Ausführungsform also nicht alle Merkmale der Hülse der eingangs genannten Art notwendig, und die Ausführungsform ermöglicht trotzdem eine gute Absicherung für den Zytostatikatransport. Die nachfolgenden Ausführungsformen können auch mit dieser Ausführungsform kombiniert werden.

Eine bevorzugte Ausführungsform besteht darin, dass im oberen Hülsenkopf ein Dichtdeckel vorgesehen ist, und dass am Dichtdeckel oder am oberen Hülsenkopf eine zweite Dichtung vorgesehen ist, die unter radialer Vorspannung an einer zweiten Dichtfläche, die am oberen Hülsenkopf bzw. am Dichtdeckel vorgesehen ist, anliegt. Der Dichtdeckel ist ein separates Element, das in der Hülse am Hülsenkopf dicht abschließend angeordnet ist. Der Dichtdeckel ist abnehmbar und einsetzbar. Man kann dann für "normal dichte" Hülsen mit nur einer Dichtung und für erfindungsgemäße Hülsen mit zwei Dichtungen denselben Hülsenkopf verwenden, man muss nur bei der erfindungsgemäßen Hülse den Dichteinsatz zusätzlich einbauen, sodass man zusätzlich den Dichtdeckel verwenden kann. Dennoch wird eine sehr zuverlässige Abdichtung zusätzlich zur Dichtung im Deckel erreicht, was auch den Transport von Zytostatika ermöglicht.

Eine weitere besonders bevorzugte Ausführungsform der zuvor genannten Ausführungsform besteht darin, dass die zweite Dichtung am Dichtdeckel vorgesehen ist, und dass die zweite Dichtfläche an einem Dichteinsatz, der in den oberen Hülsenkopf dicht eingesetzt ist, vorgesehen ist.

Eine Ausführungsform von den im vorherigen Absatz beschriebenen Merkmalen kann auch wie folgt ausgeführt sein: Hülse für eine Rohrpostanlage, bestehend aus einem zylindrischen Hülsenrohr, einem unteren Hülsenkopf und einem oberen Hülsenkopf, wobei der untere und der obere Hülsenkopf jeweils einen Gleitring aufweisen und wobei der obere Hülsenkopf einen Deckel aufweist, der um eine Achse, die am Rand der Hülse parallel zur Längsachse der Hülse angeordnet ist, schwenkbar gelagert ist, wobei der obere Hülsenkopf oder der Deckel eine erste Dichtfläche und der Deckel bzw. der obere Hülsenkopf eine erste Dichtung aufweist, die bei geschlossenem Deckel unter axialer Vorspannung an der ersten Dichtfläche aufliegt, dadurch gekennzeichnet, dass im oberen Hülsenkopf ein Dichtdeckel vorgesehen ist, dass am Dichtdeckel eine zweite Dichtung vorgesehen ist, die unter radialer Vorspannung an einer zweiten Dichtfläche, die am oberen Hülsenkopf vorgesehen ist, anliegt und dass die zweite Dichtfläche an einem Dichteinsatz, der in den oberen Hülsenkopf dicht eingesetzt ist, vorgesehen ist. Es sind für diese Ausführungsform also nicht alle Merkmale der Hülse der eingangs genannten Art notwendig, und die Ausführungsform ermöglicht trotzdem eine gute Absicherung für den Zytostatikatransport. Die nachfolgenden Ausführungsformen können auch mit dieser Ausführungsform kombiniert werden.

Besonders hoch ist die Dichtheit, wenn der Dichteinsatz und der Dichtdeckel mit Dichtung kreisförmig sind. Durch die kreisförmige Ausführung werden ein gleichmäßiger Anpressdruck und gleichmäßige Dichtheit sichergestellt. Außerdem braucht man beim Einsetzen des Dichtdeckels nicht auf seine Orientierung zu achten.

Insbesondere von Vorteil ist es, wenn im Dichtdeckel ein RFID-Chip vorgesehen ist. RFID-Chips sind mittlerweile Standard bei Rohrposthülsen geworden, um jede Hülse zuverlässig identifizieren zu können und z.B. Fehlleitungen erkennen zu können. Normalerweise befindet sich der RFID-Chip im Hülsenkopf. Wenn sich der RFID-Chip aber im Dichtdeckel befindet, ermöglicht es festzustellen, ob der Deckel tatsächlich in der Hülse eingesetzt ist, sodass eine Hülse ohne Dichtdeckel nicht abgesandt werden kann und somit die doppelte Abdichtung der Hülse sichergestellt ist.

Weiters kann man vorsehen, dass bei geschlossenem Deckel zwischen dem Deckel und dem Dichtdeckel höchstens ein geringer Abstand besteht, sodass auch bei am Deckel anliegendem Dichtdeckel noch eine zuverlässige Abdichtung zwischen Dichtung und Dichtfläche besteht. Damit kann eine Hülse mit "schlampig" eingesetztem Dichtdeckel nicht geschlossen werden, es käme zur Kollision zwischen dem Deckel und dem Dichtdeckel.

Weiters ist es von Vorteil, wenn der Deckel der Hülse oder der Dichtdeckel einen Magnet aufweist, der mit einem Magnet oder mit magnetisierbarem Material im Dichtdeckel bzw. im Deckel zur Fixierung des Dichtdeckels am Deckel bei geöffneter Hülse zusammenwirkt. Somit kann der Dichtdeckel auf einfache Art und Weise auf dem Deckel der Hülse gelagert werden, während die Hülse be- bzw. entladen wird, also wenn der Deckel geöffnet ist.

Eine andere vorteilhafte Konstruktion besteht darin, dass der Dichtdeckel mit einem Band an der Hülse befestigt ist. Das Band stellt sicher, dass der Deckel an der Hülse bleibt und somit nicht verloren gehen kann. Da das Band beispielsweise innen an der Hülse befestigt sein kann, wird dabei das Schließen der Hülse verhindert, wenn sich der Dichtdeckel nicht in der Hülse (bzw. im Dichteinsatz) befindet. Dies stellt ebenfalls eine effiziente Lösung für das Sicherstellen der richtigen Bedienung insbesondere für den Transport von Zytostatika dar.

Es ist bevorzugt, dass am Deckel und am oberen Hülsenkopf Vorsprünge oder Ausnehmungen vorgesehen sind, die mit entsprechenden Ausnehmungen bzw. Vorsprüngen am oberen Hülsenkopf bzw. am Deckel zusammenwirken, wobei die Länge dieser Vorsprünge und Ausnehmungen zumindest 5 cm beträgt. Durch die erhöhte Länge der Vorsprünge verglichen mit den Vorsprüngen aus der AT 405506 B kann die Kraft, die durch das Schließen bzw. Öffnen auf die Vorsprünge wirkt, besser verteilt werden, sodass die Vorsprünge weniger leicht brechen.

### Kurze Beschreibung der Zeichnungsfiguren

An Hand der beiliegenden Zeichnungen wird die vorliegende Erfindung näher erläutert, wobei die Fig. 3, 6 und 8 keine Ausführungsformen mit austauschbarer Dichtung zeigen.

Es zeigt:
Fig. 1 eine isometrische Ansicht einer Hülse im geschlossenen Zustand;
Fig. 2 dieselbe in geöffnetem Zustand, ohne Dichtdeckel;
Fig. 3 einen Schnitt durch die Hülse aus Fig. 2 entlang der Linie III-III von Fig. 1 mit nicht austauschbarer Dichtung;
Fig. 4 eine Ansicht analog wie Fig. 2, aber mit Dichtdeckel;
Fig. 5 einen Schnitt durch die Hülse gemäß Fig. 4 entlang der Linie III-III von Fig. 1, aber in geschlossenen Zustand mit austauschbarer Dichtung, die auf einer Dichtplatte angeordnet ist;
Fig. 6 eine Ansicht analog zu Fig. 5, aber mit der Hülse im geöffneten Zustand, wobei der Dichtdeckel auf dem Deckel der Hülse liegt und die erste Dichtung nicht austauschbar ist;
Fig. 7 einen Schnitt durch den oberen Hülsenkopf ohne Deckel entlang der Linie VII-VII von Fig. 2, und
Fig. 8 einen Schnitt analog zu Fig. 5 durch eine Hülse mit einer doppelwandigen Kammer und wobei die erste Dichtung nicht austauschbar ist.

### Beschreibung der Ausführungsarten

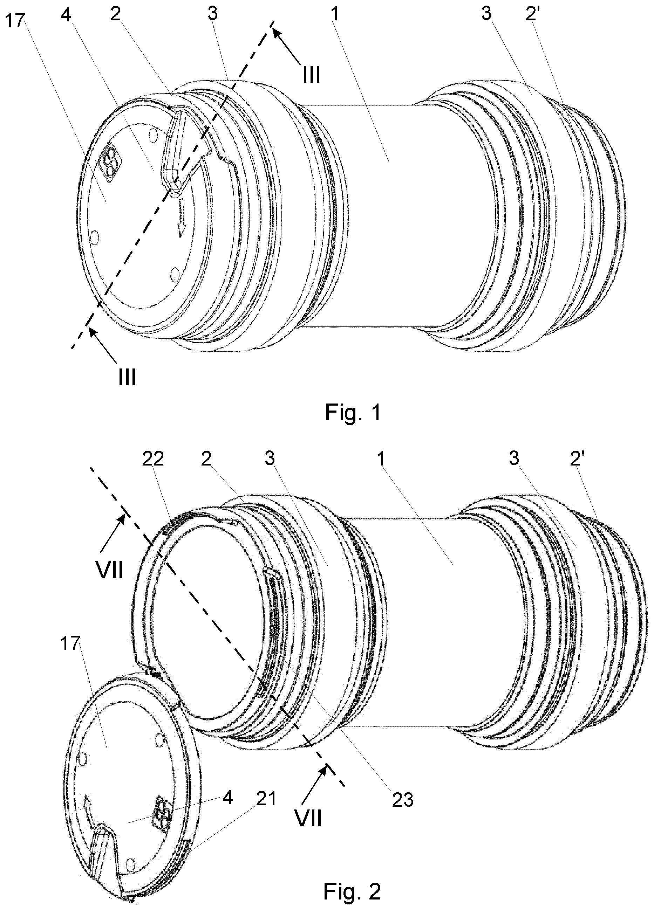

Fig. 1 zeigt eine isometrische Ansicht einer Hülse im geschlossenen Zustand. Diese Ansicht ist gleich für Hülsen mit austauschbarer erster Dichtung 7 und ohne austauschbare erste Dichtung 7 sowie für Hülsen mit Dichtdeckel 10 und Hülsen ohne Dichtdeckel 10. Hierbei weist die Hülse ein zylindrisches Hülsenrohr 1, einen oberen Hülsenkopf 2 und einen unteren Hülsenkopf 2' auf. Auf den Hülsenköpfen 2 und 2' befindet sich jeweils ein Gleitring 3. Der obere Hülsenkopf 2 weist einen Deckel 4 auf. Der untere Hülsenkopf 2' kann permanent geschlossen sein, er kann aber auch gleich wie der obere Hülsenkopf 2 aufgebaut sein.

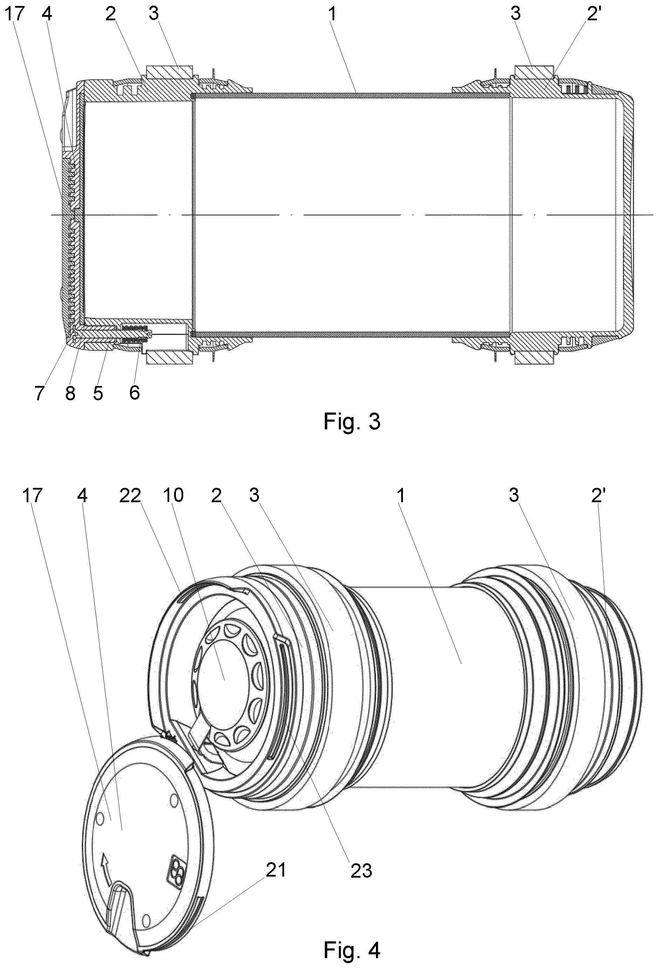

Fig. 2 zeigt die Hülse in einer isometrischen Ansicht in geöffnetem Zustand. Hierbei ist zu erkennen, dass die Hülse keinen Dichteinsatz 9' aufweist, also im Wesentlichen von außen betrachtet der eingangs erwähnten AT 405506 B entspricht. Ob die Hülse aus Fig. 2 eine austauschbare Dichtung aufweist, ist in Fig. 2 nicht zu sehen. Dies ist allerdings im Schnitt der Fig. 3 zu sehen. In Fig. 3 ist die erste Dichtung 7, die an dem Deckel nicht austauschbar befestigt ist, zu sehen. Weiters ist der Mechanismus des Deckels 4 zu erkennen. Insbesondere ist die Drehachse 5, um die sich der Deckel 4 dreht, die vorgespannte Feder 6 und eine erste Dichtung 7 des Deckels 4 zu erkennen.

Die erste Dichtung 7 ist am Deckel 4 vorgesehen und liegt an einer Dichtfläche 8 des oberen Hülsenkopfs 2 an. Damit in geschlossener Stellung der Deckel 4 nicht abgehoben werden kann (beispielsweise, weil ein schwerer Gegenstand im Inneren der Hülse beim Beschleunigen oder Bremsen gegen den Deckel 4 drückt), ist am Rand des Deckels 4 eine Ausnehmung 21 (siehe Fig. 2) vorgesehen, in die ein Vorsprung 22 des oberen Hülsenkopfes 2 ragt. Weiters ist im oberen Hülsenkopf 2 eine Ausnehmung 23 vorgesehen, in die ein (in Fig. 2 nicht sichtbarer) Vorsprung des Deckels 4 ragt. Prinzipiell ist das aus der AT 405506 B bekannt, allerdings sind die Vorsprünge und die Ausnehmungen hier deutlich länger, ca. 7 cm lang. Weiters sind Hebekeile zweckmäßig, wie in AT 405506 B beschrieben, um den Deckel 4 nach geringfügiger Schwenkbewegung vom oberen Hülsenkopf 2 abzuheben, damit danach keine Reibung zwischen Dichtung 7 und Dichtfläche 8 auftritt.

Fig. 4 zeigt eine erfindungsgemäße geöffnete Hülse mit einem Dichtdeckel 10.

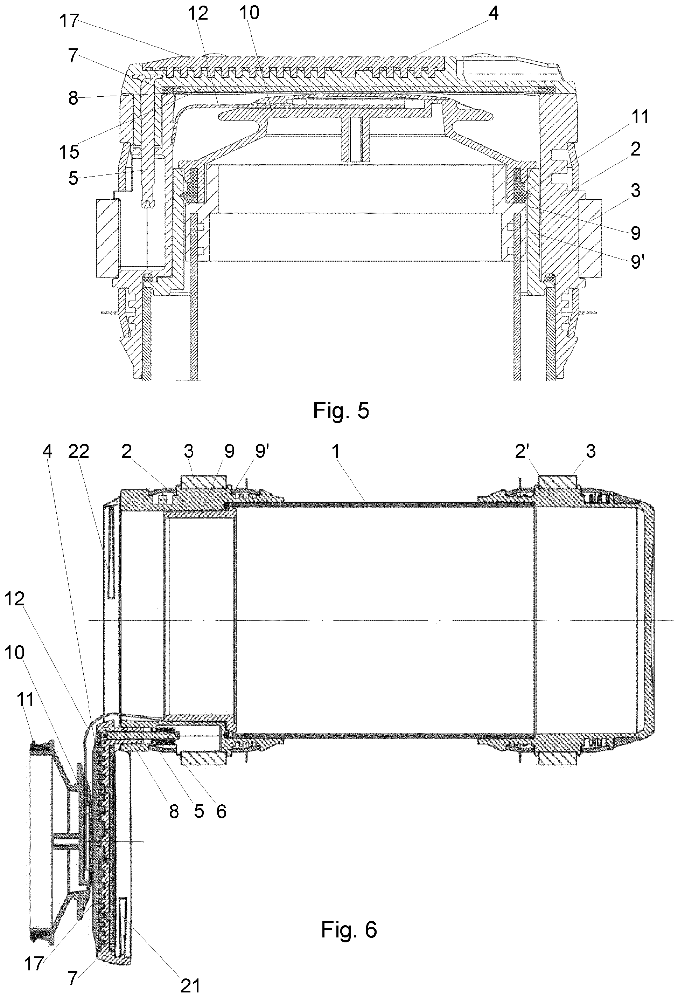

Fig. 5 zeigt einen Schnitt durch die erfindungsgemäße Hülse aus Fig. 4. Die austauschbare erste Dichtung 7 ist an einer Dichtplatte befestigt. Die Dichtplatte ist am Deckel 4 befestigt. Der Befestigungsmechanismus ist nicht gezeigt. Eine Möglichkeit stellt das direkte Schrauben auf den Deckel dar, wodurch die Dichtplatte 16 sicher und unbeweglich befestigt ist, oder eine Schnappverbindung, mit der die Dichtplatte 16 und somit die erste Dichtung 7 leicht entfernt werden kann. Durch die separate und leicht austauschbare erste Dichtung kann ein beliebiges Material für die Dichtung verwendet werden und der restliche Deckel im 1k oder 2k-Spritzguss gefertigt werden. Somit kann auch ein wenig reibendes Material als Dichtung verwendet werden, wodurch das Öffnen und Schließen des Deckels erleichtert wird. Natürlich kann auch die Wahl des Materials der ersten Dichtung 7 darauf abzielen, optimale Dichteigenschaften zu erzeugen.

Der Dichtdeckel 10 weist eine Dichtung 11 auf, die mit einer Dichtlippe an einer Dichtfläche 9 eines Dichteinsatzes 9' anliegt. Der Dichtdeckel 10 ist mittels eines Bands 12 an der Hülse befestigt. Das Band 12 ist im Inneren der Hülse befestigt, sodass ein Schließen des Deckels 4 nur möglich ist, wenn sich der Dichtdeckel 10 im Inneren der Hülse befindet. Außerdem ist die Höhe des Dichtdeckels 10 so gewählt, dass zum Deckel 4 nur ein geringer Abstand verbleibt, sodass der Deckel 4 nur dann geschlossen werden kann, wenn der Dichtdeckel 10 bis zum Anschlag in den Dichteinsatz 9' geschoben wurde. Der Deckel 4 kann also weder geschlossen werden, wenn der Dichtdeckel 10 gar nicht eingesetzt ist, noch, wenn der Dichtdeckel 10 nur schlampig eingesetzt ist. Somit ist sichergestellt, dass die Hülse nur dann weggesendet werden kann, wenn beide Dichtungen 7 und 11 in Funktion sind.

In der Fig. 5 ist die vorgespannte Feder 6 bzw. die Vorrichtung für die Vorspannung nicht gezeigt.

Fig. 6 zeigt die Hülse im geöffneten Zustand. Hierbei ist die erste Dichtung 7 nicht auf einer Dichtplatte 16 angebracht. Dies verhindert in diesem Fall das Austauschen der ersten Dichtung und erschwert die Herstellung. Dennoch ist trotz der nicht austauschbaren ersten Dichtung 7 der Dichtdeckel 10 bzw. die zweite Dichtung 11 unabhängig implementierbar und in der Ausführungsform der Fig. 6 implementiert.

Der Dichtdeckel 10 befindet sich jetzt nicht mehr, wie in Fig. 5 zu sehen, im Dichteinsatz 9', sondern ist auf dem Deckel 4 der Hülse gelagert. Bevorzugt befindet sich im Deckel 4 und im Dichtdeckel 10 jeweils zumindest ein Magnet, sodass diese aneinander befestigt werden können. Einer der Magnete kann durch magnetisierbares Material ersetzt sein. Das Band 12 stellt sicher, dass der Dichtdeckel 10 nicht verloren geht. In der geöffneten Position der Hülse wird das Be- und Entladen der Hülse ermöglicht.

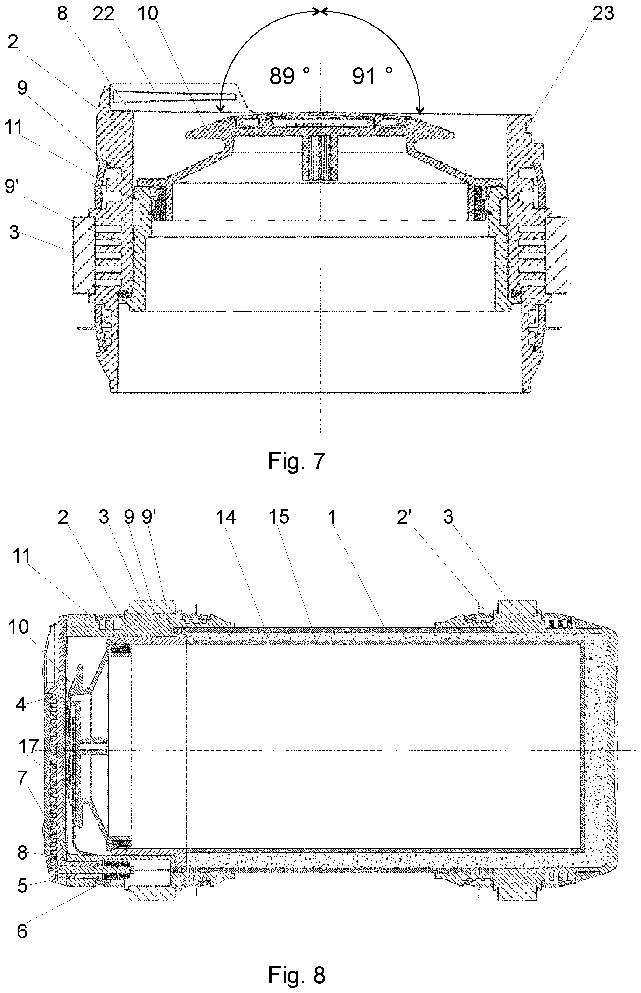

Fig. 7 zeigt im Detail die Neigung zwischen der Dichtfläche 8 der Hülse und der Längsachse der Hülse bzw. der Achse 5 des Deckels 4, denn in diesem Fall ist die Längsachse der Hülse parallel zur Achse 5 des Deckels 4. Die Achse 5 des Deckels 4 ist in Fig. 7 nicht zu sehen, da sie vor der Schnittebene liegt. Um das Öffnen zu erleichtern, kommt es darauf an, dass sich der Deckel 4 von der Dichtfläche 8 beim Öffnen entfernt. Dies ist dann der Fall, wenn der Winkel zwischen der Dichtfläche 8 und der Achse 5 des Deckels 4 von 90 ° abweicht und die Abweichung so vorliegt, dass das Ende der Dichtfläche 8, in dessen Richtung sich der Deckel 4 öffnet, näher an der Hülsenmitte liegt als das Ende der Dichtfläche 8, von dem sich der Deckel beim Öffnen wegbewegt. Somit bewegt sich der Deckel 4 ganz zu Beginn der Öffnungsbewegung nicht parallel zur Dichtfläche 8, sondern leicht von der Dichtfläche 8 weg, wodurch die Kraft zum Öffnen reduziert wird. Danach werden die oben erwähnten Hebekeile wirksam.

Fig. 8 zeigt eine Ausführungsform mit einer doppelwandigen Kammer, wobei die erste Dichtung 7 nicht auf einer Dichtplatte angebracht ist. Dazu ist innerhalb des Hülsenrohrs 1 eine zweite Wand 14 angeordnet. Dazwischen kann Isoliermaterial 15 angeordnet werden. Somit können also auch tiefgekühlte Proben versendet werden, ohne dass sie während des Transports stark erwärmt werden. Der Dichtdeckel 10 wirkt hier also zusätzlich als Wärmedämmelement. Weiters bietet die zweite Wand 14 auch Redundanz für die Dichtheit der Hülse.

### Bezugszeichenliste

1 Hülsenrohr
2 oberer Hülsenkopf
2' unterer Hülsenkopf
3 Gleitring
4 Deckel
5 Achse des Deckels
6 vorgespannte Feder
7 erste Dichtung
8 erste Dichtfläche
9 zweite Dichtfläche
9' Dichteinsatz
10 Dichtdeckel
11 zweite Dichtung
12 Band zur Befestigung des Dichtdeckels
14 zweite Wand
15 Isoliermaterial
16 Dichtplatte
17 Prallfläche
21 Ausnehmung
22 Vorsprung
23 Ausnehmung

## Patentansprüche

1. Hülse für eine Rohrpostanlage, bestehend aus einem zylindrischen Hülsenrohr (1), einem unteren Hülsenkopf und einem oberen Hülsenkopf (2), wobei der untere und der obere Hülsenkopf (2) jeweils einen Gleitring (3) aufweisen und wobei der obere Hülsenkopf (2) einen Deckel (4) aufweist, der um eine Achse (5), die am Rand der Hülse im Wesentlichen parallel zur Längsachse der Hülse angeordnet ist, schwenkbar gelagert ist und der Deckel (4) mittels Drehung um die Achse (5) des Deckels (4) öffenbar ist, wobei der obere Hülsenkopf (2) eine erste Dichtfläche (8) und der Deckel (4) eine erste Dichtung (7) aufweist, die bei geschlossenem Deckel (4) unter axialer Vorspannung an der ersten Dichtfläche (8) aufliegt, **dadurch gekennzeichnet, dass** die erste Dichtung (7) austauschbar ist und die erste Dichtung (7) im montierten Zustand gegenüber dem Deckel (4) unbeweglich ist.

2. Hülse nach Anspruch 1, **dadurch gekennzeichnet, dass** die erste Dichtung (7) aus einem anderen Material als der Deckel (4) besteht, dass der Deckel (4) bevorzugt aus zwei Materialien besteht, und dass der Deckel (4) besonders bevorzugt im 1k oder 2k Spritzguss hergestellt ist.

3. Hülse nach Anspruch 1 oder 2, **dadurch gekennzeichnet, dass** die erste Dichtung (7) auf einer Dichtplatte (16) befestigt ist und die Dichtplatte (16) auf dem Deckel (4) befestigt ist.

4. Hülse nach einem der Ansprüche 1 bis 3, **dadurch gekennzeichnet, dass** die Dichtfläche (8) der Hülse zur Achse (5) des Deckels in einem um rund 1 ° vom rechten Winkel abweichenden Winkel steht, sodass ein Ende der Dichtfläche (8) in Öffnungsrichtung näher an der Hülsenmitte liegt als ein Ende der Dichtfläche (8) in entgegengesetzter Öffnungsrichtung.

5. Hülse nach einem der Ansprüche 1 bis 4, **dadurch gekennzeichnet, dass** im oberen Hülsenkopf (2) ein Dichtdeckel (10) vorgesehen ist, **und dass** am Dichtdeckel (10) oder am oberen Hülsenkopf (2) eine zweite Dichtung (11) vorgesehen ist, die unter radialer Vorspannung an einer zweiten Dichtfläche (9), die am oberen Hülsenkopf (2) bzw. am Dichtdeckel (10) vorgesehen ist, anliegt.

6. Hülse nach Anspruch 5, **dadurch gekennzeichnet, dass** die zweite Dichtung (11) am Dichtdeckel (10) vorgesehen ist, **und dass** die zweite Dichtfläche (9) an einem Dichteinsatz (9'), der in den oberen Hülsenkopf (2) dicht eingesetzt ist, vorgesehen ist.

7. Hülse Anspruch 5 oder 6, **dadurch gekennzeichnet, dass** der Dichteinsatz (9') und der Dichtdeckel (10) mit Dichtung (11) kreisförmig sind.

8. Hülse nach einem der Ansprüche 5 bis 7, **dadurch gekennzeichnet, dass** im Dichtdeckel (10) ein RFID-Chip vorgesehen ist.

9. Hülse nach einem der Ansprüche 5 bis 8, **dadurch gekennzeichnet, dass** bei geschlossenem Deckel (4) zwischen dem Deckel (4) und dem Dichtdeckel (10) höchstens ein geringer Abstand besteht, sodass auch bei am Deckel (4) anliegendem Dichtdeckel (10) noch eine zuverlässige Abdichtung zwischen Dichtung (11) und Dichtfläche (9) besteht.

10. Hülse nach einem der Ansprüche 5 bis 9, **dadurch gekennzeichnet, dass** der Deckel (4) der Hülse oder der Dichtdeckel (10) einen Magnet aufweist, der mit einem Magnet oder mit magnetisierbarem Material im Dichtdeckel (10) bzw. im Deckel (4) zur Fixierung des Dichtdeckels (10) am Deckel (4) bei geöffneter Hülse zusammenwirkt.

11. Hülse nach einem der Ansprüche 5 bis 10, **dadurch gekennzeichnet, dass** der Dichtdeckel (10) mit einem Band (12) an der Hülse befestigt ist.

12. Hülse nach einem der Ansprüche 1 bis 11, **dadurch gekennzeichnet, dass** am Deckel (4) und am oberen Hülsenkopf (2) Vorsprünge (22) oder Ausnehmungen (21, 23) vorgesehen sind, die mit entsprechenden Ausnehmungen (21, 23) bzw. Vorsprüngen (22) am oberen Hülsenkopf (2) bzw. am Deckel (4) zusammenwirken, wobei die Länge dieser Vorsprünge (22) und Ausnehmungen (21, 23) zumindest 5 cm beträgt.
